# EUROPÄISCHE PATENTSCHRIFT

(11) **EP 0 685 503 B1**
(45) Veröffentlichungstag und Bekanntmachung des Hinweises auf die Patenterteilung: **02.09.1998**
(21) Anmeldenummer: 95107681.9
(22) Anmeldetag: 19.05.1995
(51) Int. Cl.: C08G 64/30

(54) **Verfahren zur Herstellung von thermoplastischem Polycarbonat**
Process for the preparation of thermoplastic polycarbonates
Procédé pour la préparation de polycarbonate thermoplastique

(30) Priorität: 01.06.1994 DE 4419230
(43) Veröffentlichungstag der Anmeldung: 06.12.1995
(73) Patentinhaber: BAYER AG, 51368 Leverkusen (DE)
(72) Erfinder: Kühling, Steffen, Dr., D-40670 Meerbusch (DE); Stebani, Jürgen, Dr., D-47800 Krefeld (DE)

(56) Entgegenhaltungen:
- EP-A- 0 481 296
- DE-A- 4 238 123

## Beschreibung

Gegenstand der vorliegenden Erfindung ist ein Umesterungsverfahren zur Herstellung von lösungsmittelfreiem Polycarbonat, (+) in dem der Gehalt an Verzweigerstruktur der Formel (4) 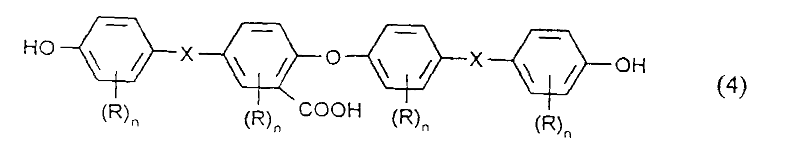 mit
- X =: C₁-C₈-Alkyliden oder Cycloalkyliden, S oder eine Einfachbindung und
- R =: CH₃, Cl oder Br und
- n =: Null, 1 oder 2,
einen Wert nach Totalverseifung und HPLC-Bestimmung von 300 ppm nicht übersteigt, ausgehend von Diphenolen, Kohlensäurediarylestern und gegebenenfalls Verzweigern und/oder Monophenolen sowie Katalysatoren bei Temperaturen zwischen 80°C und 400°C und Drucken von 100 000 Pa (1000 mbar) bis 1 Pa (0,01 mbar), das dadurch gekennzeichnet ist, daß man Phosphazen-Katalysatoren der Formel (1) 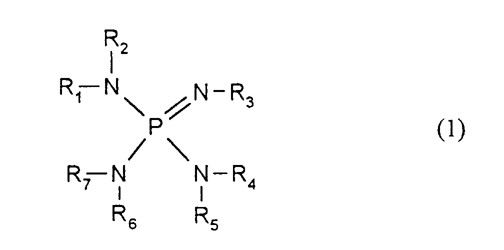 worin
R₁, R₂, R₃, R₄, R₅, R₆, R₇ = H, Alkyl, Alkenyl, Cycloalkyl, Aryl, Cycloalkenyl und die Reste R₁, R₂, R₃, R₄, R₅, R₆, R₇ gleich oder verschieden sein können,
oder der Formel (2) 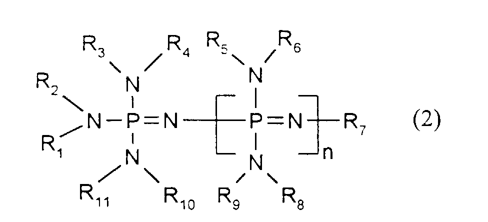 worin
- R₁ bis R₁₁ =: H, Alkyl, Alkenyl, Cycloalkyl, Aryl, Cycloalkenyl,
- n =: 1 bis 10 und die Reste R₁ bis R₁₁ gleich oder verschieden sein können
oder der Formel (3) 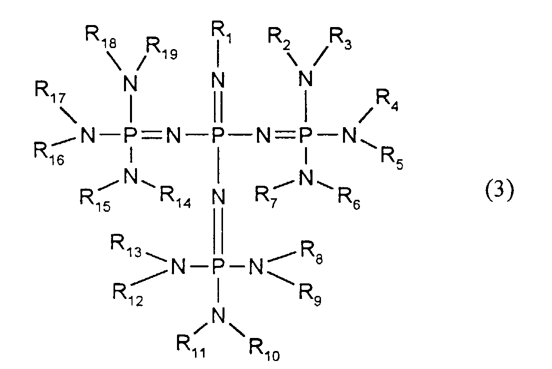 worin
R₁ bis R₁₉ = H, Alkyl, Alkenyl, Cycloalkyl, Aryl, Cycloalkenyl,
oder Kₓ⁺ X^{x-}
worin
- K⁺: die entsprechenden Kationen der obengenannten Formel 1 bis 3 darstellen und
- X =: z.B. Carbonat, Acetat, Nitrat, Hydroxid, Halogenid, Phenolat, Diphenolat, Phosphat, Hydrogenphosphat und Boranat sein kann,
in Mengen von 10⁻² bis 10⁻⁸ Mol, bezogen auf 1 Mol Diphenol, einsetzt.

Die nach dem erfindungsgemäßen Verfahren hergestellten Polycarbonate sind lösungsmittelfrei, mit heller Eigenfarbe ausgestattet und weitgehend frei von unerwünschten Fehlstellen im Polycarbonat.

Die erfindungsgemäß einzusetzenden Umesterungskatalysatoren sind beispielsweise bekannt aus Angew. Chemie, 99 (11), Seiten 1212 - 1214 (1987), Nachrichten aus Chemie, Technik und Labor, 38, Seite 1214 - 1226 (1990) und aus Chimia, 39 (9), Seiten 269 - 272 (1985).

Die Herstellung von aromatischen Oligo-/Polycarbonaten nach dem Schmelzeumesterungsverfahren ist literaturbekannt.

Hierbei werden als Katalysatoren basische Alkali-, Erdalkali- und Übergangsmetall-hydroxide, alkoholate, carbonate, acetate, boranate, hydrogenphosphate und hydride beschrieben. Bei Verwendung dieser Verbindungen treten bei der Umesterung unerwünschte Nebenreaktionen auf, die zu Fehlstrukturen führen, so daß unkontrolliert verzweigte Polycarbonate (siehe auch Vergleichsbeispiel 1) erhalten werden, die bezüglich der optischen und mechanischen Eigenschaften gegenüber linearem Polycarbonat Eigenschaftsdefizite aufweisen.

Es wurde nun gefunden, daß man mit Hilfe der Phosphazen-Katalysatoren der Formel (1) oder der Formel (2) oder der Formel (3) zu farbhellen Polycarbonaten gelangt. Die erfindungsgemäß eingesetzten Katalysatoren sind gegenüber den herkömmlichen organischen Basen (z.B. Ammonium-, Phosphonium-Basen) thermisch stabiler, so daß weniger Zersetzungsprodukte im Destillat gefunden werden. Die nach dem erfindungsgemäßen Verfahren hergestellten Polycarbonate sind darüber hinaus weitgehend frei von unerwünschten Fehlstellen im Polycarbonat.

Weitgehend frei von unerwünschten Fehlstellen im Polycarbonat im Sinne des erfindungsgemäßen Verfahrens heißt, daß der Gehalt an Verzweiger der Formel (4) 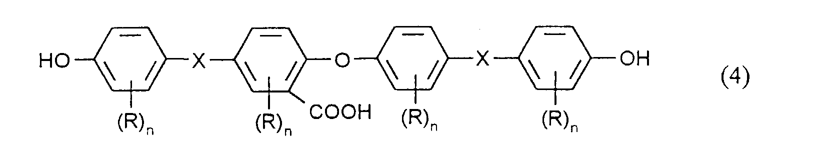 mit
- X =: C₁-C₈-Alkyliden oder Cycloalkyliden, S oder eine Einfachbindung und
- R =: CH₃, Cl oder Br und
- n =: Null, 1 oder 2,

im Polycarbonat einen Wert nach Totalverseifung und HPLC-Bestimmung von 300 ppm nicht übersteigt.

Für das erfindungsgemäße Verfahren geeignete Diphenole sind solche der Formel (5) 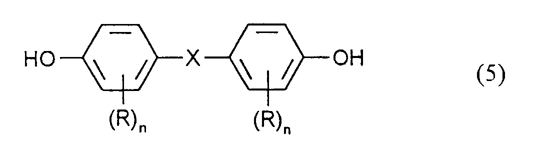 worin
- X =: C₁-C₈-Alkyliden oder Cycloalkyliden, S oder eine Einfachbindung und
- R =: CH₃, Cl oder Br und
- n =: Null, 1 oder 2 ist.

Bevorzugte Diphenole sind z.B.:
4,4' -Dihydroxydiphenyl,
4,4'-Dihydroxydiphenylsulfid,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan.

Besonders bevorzugte Diphenole aus den vorstehend genannten sind 2,2Bis-(4-hydroxyphenyl)-propan und 1,1-Bis-(4-hydroxyphenyl)-3,3,5-trimethylcyclohexan.

Die vorstehenden Diphenole können zur Herstellung von Homopolymeren oder Copolymeren eingesetzt werden.

Die Polycarbonate können durch den Einsatz geringer Mengen Verzweiger bewußt und kontrolliert verzweigt werden. Einige geeignete Verzweiger sind:
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bi s[4,4-bi s-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,säureester,
Tetra-(4-hydroxyphenyl)-methan,
Tetra-(4-(4-hydroxyphenyl-isopropyl)-phenoxy)-methan,
1,4-Bis - (4,4-Bis-(4',4''-dihydroxytriphenyl)-methyl)-benzol und insbesondere
α,α',α"-Tris(4-hydroxyphenyl)-1,3,5-triisopropylbenzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3 -dihydroindol.

Die gegebenenfalls mitzuverwendenden 0,05 bis 2 Mol-%, bezogen auf eingesetzte Diphenole, an Verzweigern, können mit den Diphenolen zusammen eingesetzt werden.

Kohlensäurediester im Sinne vorliegender Erfindung sind Di-C₆-C₁₄-Arylester, vorzugsweise die Diester von Phenol oder alkylsubstituierten Phenolen, also Diphenylcarbonat oder z.B. Dikresylcarbonat. Bezogen auf 1 Mol Bisphenol werden die Kohlensäurediester in 1,01 bis 1,30 Mol, bevorzugt in 1,02 bis 1,15 Mol eingesetzt.

Es ist darauf zu achten, daß die Reaktionskomponenten, also die Diphenole und die Kohlensäurediarylester frei von Alkali- und Erdalkaliionen sind, wobei Mengen von kleiner 0,01 ppm an Alkali- und Erdalkaliionen toleriert werden können. Derart reine Kohlensäurediarylester bzw. Diphenole sind erhältlich, indem man die Kohlensäurediarylester bzw. Diphenole umkristallisiert, wäscht oder destilliert. Beim erfindungsgemäßen Verfahren soll der Gehalt an Alkali- und Erdalkalimetallionen sowohl im Diphenol als auch im Kohlensäurediester einen Wert von <0,01 ppm betragen.

Katalysatoren im Sinne des erfindungsgemäßen Verfahrens sind beispielsweise:
Phosphazen-Base P₅-t-Bu = 1-tert.-Butyl-4,4,6,6,6-pentakis-(dimethylamino)-2,2bis-[tris(dimethylamino)-phosphor-anyli den-amino]-2λ⁵4λ⁵-catenatriphosphazen,
Phosphazen-Base P₅-t-Oct = 1-tert.-Octyl-4,4,6,6,6-pentakis-(dimethylamino)-2,2-bis-[tri s(dimethylamino)-phosphor-anyliden-amino]-2λ⁵,4λ⁵-catenatriphosphazen,
Phosphazen-Base P₄-t-Oct = 1-tert.-Octyl-4,4,4-tris-(dimethylamono)-2,2-bis-[tris(dimethyl amino)-phosphor-anyliden-amino]-2λ⁵,4λ⁵-catenadi-(phosphazen),
Phosphazen-Base P₄-t-Bu = 1-tert.-Butyl-4,4,4-tris-(dimethylamino)-2,2-bis-[tris(dimethylamino)-phosphor-anyliden-amino]-2λ⁵,4λ⁵-catenadi-(phosphazen),
Phosphazen-Base P₂-t-Et = 1-Ethyl-2,2,4,4,4-pentakis-(dimethylamino)-2λ⁵,4λ⁵-catenadi-(phosphazen),
bevorzugt sind:
Phosphazen-Base P₁-t-Oct = tert.-Octyl-imino-tri s-(dimethyl amino)-phosphoran, Phosphazen-Base P₁-t-Butyl = tert.-Butyl-imino-tris-(dimethylamino)-phosphoran, BEMP = 2-tert.-Butylimino-2-diethylamino-1,3-dimethyl-perhydro-1,3-diaza-2-phosphorin.

Diese Katalysatoren werden in Mengen von 10⁻² bis 10⁻⁸ Mol, bezogen auf 1 Mol Diphenol, eingesetzt.

Die Katalysatoren können auch in Kombination (zwei oder mehrere) miteinander eingesetzt werden.

Die Katalysatoren können auch in Kombination (zwei oder mehrere) mit Alkali-/Erdalkalimetallkatalysatoren eingesetzt werden. Hierbei kann es vorteilhaft sein die Alkali-/Erdalkalimetallkatalysatoren zu einem späteren Zeitpunkt (z.B. nach der Oligocarbonatsynthese bei der Polykondensation in der zweiten Stufe) zuzusetzen. Die Zugabe des Alkali-/Erdalkalimetallkatalysators kann z.B. als Feststoff oder als Lösung in Wasser, Phenol, Oligocarbonat, Polycarbonat erfolgen.

Die Alkali-/Erdalkalimetallkatalysatoren werden bevorzugt in Mengen von 10⁻⁸ bis 10⁻⁴ Mol bezogen auf 1 Mol Diphenol, besonders bevorzugt in einer Konzentration von 10⁻⁷ bis 10⁻⁵ Mol eingesetzt. Es werden beispielsweise die Lithium-, Natrium-, Kalium-, Cäsium-, Calcium-, Barium-, Magnesium-, -hydroxide, -carbonate, -halogenide, -phenolate, -diphenolate, -fluoride, -acetate, -phosphate, -hydrogenphosphate, -boranate verwendet. Die Mitverwendung von Alkali- bzw. Erdalkalimetallkatalysatoren widerspricht nicht der vorstehend erwähnten Forderung nach Reinheit der Reaktionspartner.

Die Polycarbonatherstellung kann in einer Stufe durchgeführt werden, die aromatischen Dihydroxyverbindungen und die Kohlensäurediester werden dann nach den aus der Literatur üblichen Polykondensationsbedingungen umgesetzt.

Dies sind beispielsweise das Aufschmelzen der aromatischen Dihydroxyverbindung und des Kohlensäurediesters bei Temperaturen von 80 bis 250°C, bevorzugt 100 bis 230°C, besonders bevorzugt 120 bis 190°C unter normalem Druck in 0 bis 5 Stunden, bevorzugt 0,25 bis 3 Stunden. Die Zugabe des erfindungsgemäßen Katalysators oder Kombinationen der erfindungsgemäßen Katalysatoren mit Alkali-/Erdalkalikatalysatoren kann vor dem Aufschmelzen oder zu den aufgeschmolzenen Edukten erfolgen. Nun wird durch Anlegen von Vakuum und Erhöhung der Temperatur durch Abdestillieren des Monophenols ein Oligocarbonat aus der aromatischen Dihydroxyverbindung und dem Kohlensäurediester hergestellt. Im weiteren wird dann bei der Polykondensation durch weiteres Erhöhen der Temperatur auf 240 bis 400°C und Erniedrigung des Drucks bis auf 1 Pa (0,01 mbar) das Polycarbonat hergestellt.

Es kann aber auch vorteilhaft sein, die Polykondensation in zwei Stufen (1. Stufe Oligocarbonatherstellung unter Verwendung der erfindungsgemäßen Katalysatoren, 2. Stufe Polycarbonatherstellung unter Zugabe von Alkali-/Erdalkalimetallkatalysatoren) durchzuführen.

Die Oligocarbonate der ersten Stufe weisen mittlere Molekulargewichte M_{w} von 3000 bis 24 000, bevorzugt 5000 bis 20 000 auf, ermittelt durch Messung der relativen Lösungsviskosität in Dichlormethan oder in Mischungen gleicher Gewichtsmengen Phenol/o-Dichlorbenzol geeicht durch Lichtstreuung. Die Molekulargewichte der Oligocarbonate der 1. Stufe richten sich danach, wie die gewünschte Endviskosität der Polycarbonate sein soll; so werden durch die Kondensation von niedrigmolekularen Oligocarbonaten niedrigmolekulare Polycarbonate in der 2. Stufe erhalten und durch die Kondensation von höhermolekularen Oligocarbonaten höhermolekulare Polycarbonate erhalten. Die Temperatur zur Herstellung dieser Oligocarbonate liegt zwischen 100°C bis 290°C, bevorzugt zwischen 150°C und 280°C. Die bei der Umesterung zum Oligocarbonat entstehenden Monophenole werden durch Anlegen von Vakuum von 100 000 Pa (1 bar)bis 50 Pa (0,5 mbar), bevorzugt 50 000 Pa (500 mbar) bis 100 Pa (1 mbar) entfernt. In der zweiten Stufe der Polykondensation des Oligocarbonats wird durch Zugabe eines Alkali-/Erdalkalimetallkatalysators in das Oligocarbonat und durch weiteres Erhöhen der Temperatur auf 230 bis 400°C, bevorzugt 250 bis 320°C und einem Druck <100 mbar bis 0,01 mbar das Polycarbonat hergestellt.

Die Reaktion der aromatischen Dihydroxyverbindung und des Kohlensäurediesters kann im Sinne des erfindungsgemäßen Verfahrens kontinuierlich oder diskontinuierlich beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren durchgeführt werden.

Die Umsetzung des Oligocarbonats zum Polycarbonat kann auch entsprechend der WO 90/7536 bzw. des EP-A 338 085 erfolgen, indem das erfindungsgemäß hergestellte Oligocarbonat kristallisiert und in der festen Phase festphasenpolykondensiert wird.

Die aromatischen Polycarbonate des erfindungsgemäßen Verfahrens sollen mittlere Gewichtsmolmassen M_{w} von 18 000 bis 60 000, vorzugsweise 19 000 bis 40 000 haben, ermittelt durch Messung der relativen Lösungsviskosität in Dichlormethan oder in Mischungen gleicher Gewichtsmengen Phenol/o-Dichlorbenzol, geeicht durch Lichtstreuung.

Die erfindungsgemäß hergestellten Polycarbonate haben eine helle Eigenfarbe, besitzen bevorzugt einen niedrigen OH-Endgruppengehalt von <1200 ppm und sind hydrolyse- und thermostabil.

Zur Begrenzung der mittleren Gewichtsmolmassen M_{w} der Polymeren können in bekannter Weise (EP 360 578) Molmassenregler, wie beispielsweise Alkylphenol (Isooctylphenol, t-Butylphenol, Cumylphenol), in den erforderlichen Mengen eingesetzt werden.

Zur Verbesserung der Eigenschaften können den erfindungsgemäß hergestellten Polycarbonaten Hilfs- und Verstärkungsstoffe zugemischt werden. Als solche sind u.a. in Betracht zu ziehen:
Stabilisatoren (z.B. UV-, Thermo-, Gammastrahlenstabilisatoren), Antistatika, Fließhilfsmittel, Entformungsmittel, Brandschutzmittel, Pigmente, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas und Kohlenstoffasern.

Weiterhin können den erfindungsgemäßen Polycarbonaten auch andere Polymere zugemischt werden, z.B. Polyolefine, Polyurethane, Polystyrol.

Der Zusatz dieser Stoffe erfolgt vorzugsweise auf herkömmlichen Aggregaten zum fertigen Polycarbonat, kann jedoch, je nach den Erfordernissen, auf einer anderen Stufe des erfindungsgemäßen Verfahrens erfolgen.

Darüber hinaus ist für besondere Anwendungen auch die Modifizierung der Polycarbonate durch Einkondensation von Blöcken, Segmenten und Comonomeren möglich, z.B. Siloxanblöcken mit OH-Endgruppen, aromatische und aliphatische Polyester mit OH- und Carbonsäure-Endgruppen, Polyphenylensulfid-Blöcke mit OH-Endgruppen, Polyphenylenoxid-Blöcke mit OH-Endgruppen.

Die erfindungsgemäß hergestellten Polycarbonate eignen sich für die üblichen Anwendungsgebiete, also in der Elektrotechnik, im Bausektor und im Kraftfahrzeugbau mit z.B. als Trägermaterial für Datenspeicher, für Stegplatten zur Abdeckung oder als Gehäusematerial von elektronischen Geräten.

### Beispiele

### Vergleichsbeispiel 1

In einem 500 ml Dreihalskolben mit Rührer, Innenthermometer und Vigreuxkolonne (30 cm, verspiegelt) mit Brücke werden 114,15 g (0,500 mol) Bisphenol A und 113,54 g (0,530 Mol) Diphenylcarbonat eingewogen. Die Apparatur wird durch Anlegen von Vakuum und Spülen mit Stickstoff (3 mal) vom Luftsauerstoff befreit und das Gemisch auf 150°C aufgeheizt. Jetzt werden 0,00029 g (5∗10⁻⁴ Mol-%) Natriumphenolat, bezogen auf Bisphenol A, als 1 %ige, wäßrige Lösung zugegeben und das entstehende Phenol bei 10 000 Pa (100 mbar) abdestilliert. Gleichzeitig wird die Temperatur bis auf 250°C gesteigert. Nach 1 Stunde wird das Vakuum auf 1 000 Pa (10 mbar) verbessert. Durch Absenken des Vakuums auf 50 Pa (0,5 mbar) und Temperaturerhöhung auf 280°C wird die Polykondensation erreicht. Man erhält ein lösungsmittelfreies Polycarbonat mit einer relativen Lösungsviskosität von 1,388 (Dichlormethan, 25°C, 5 g/l). Der Gehalt an Verzweiger der Formel (6) im hergestellten Polycarbonat beträgt 350 ppm.

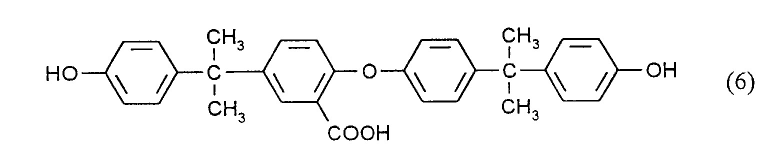

### Beispiel 1

In einem 500 ml Dreihalskolben mit Rührer, Innenthermometer und Vigreuxkolonne (30 cm,verspiegelt) mit Brücke werden 114,15 g (0,500 Mol) Bisphenol A und 113,54 g (0,530 Mol) Diphenylcarbonat eingewogen. Die Apparatur wird durch Anlegen von Vakuum und Spülen mit Stickstoff (3 mal) vom Luftsauerstoff befreit und das Gemisch auf 150°C aufgeheizt. Jetzt werden 0,000687 g (5*10⁻⁴ Mol-%) BEMP = 2-tert.-Butylimino-2-diethylamino-1,3-dimethyl-perhydro-1,3-diaza-2-phosphorin, bezogen auf Bisphenol A, als 1 %ige wäßrige Lösung zugegeben und das entstehende Phenol bei 10 000 Pa (100 mbar)abdestilliert. Gleichzeitig wird die Temperatur bis auf 250°C gesteigert. Nun wird das Vakuum stufenweise bis auf 100 Pa (1 mbar) verbessert und die Temperatur auf 260°C erhöht. Anschließend wird die Temperatur auf 280°C erhöht und bei 10 Pa (0,1 mbar) 1,5 Stunden gerührt. Man erhält ein farbhelles, lösungsmittelfreies Polycarbonat mit einer relativen Lösungsviskosität von 1,234 (Dichlormethan, 25°C, 5 g/l). Der Gehalt an Verzweiger der Formel (6) im hergestellten Polycarbonat beträgt 14 ppm. Der phenolische OH-Wert des Polycarbonats beträgt 340 ppm.

### Beispiel 2

Wie Beispiel 1, nur werden 0,001376 g (1^{∗}10⁻³ Mol-%) BEMP = 2-tert.-Butylimino-2-diethylamino- 1,3 -dimethyl-perhydro- 1 ,3-diaza-2-phosphorin eingesetzt. Man erhält ein farbhelles, lösungsmittelfreies Polycarbonat mit einer relativen Lösungsviskosität von 1,254 (Dichlormethan, 25°C, 5 g/l). Der Gehalt an Verzweiger der Formel (6) im hergestellten Polycarbonat beträgt 25 ppm. Der phenolische OH-Wert des Polycarbonats beträgt 290 ppm.

### Beispiel 3

Wie Beispiel 1, nur es wird bei 300°C 1,5 h in der letzten Stufe der Polykondensation polymerisiert. Man erhält ein farbhelles, lösungsmittelfreies Polycarbonat mit einer relativen Lösungsviskosität von 1,299 (Dichlormethan, 25°C, 5 g/l). Der Gehalt an Verzweiger der Formel (6) im hergestellten Polycarbonat beträgt 40 ppm. Der phenolische OH-Wert des Polycarbonats beträgt 280 ppm.

### Beispiel 4

In einem 500 ml Dreihalskolben mit Rührer, Innenthermometer und Vigreuxkolonne (30 cm, verspiegelt) mit Brücke werden 114,15 g (0,500 Mol) Bisphenol A und 113,54 g (0,530 Mol) Diphenylcarbonat eingewogen. Die Apparatur wird durch Anlegen von Vakuum und Spülen mit Stickstoff (3 mal) vom Luftsauerstoff befreit und das Gemisch auf 150°C aufgeheizt. Jetzt werden 0,000687 g (5*10⁻⁴ Mol-%) BEMP = 2-tert.-Butylimino-2-diethylamino-1,3-dimethyl-perhydro-1,3-diaza-2-phosphorin, bezogen auf Bisphenol A, als 1 %ige wäßrige Lösung zugegeben und das entstehende Phenol bei 10 000 Pa (100 mbar) abdestilliert. Gleichzeitig wird die Temperatur bis auf 250°C gesteigert. Nun wird das Vakuum stufenweise bis auf 100 Pa (1 mbar) verbessert und die Temperatur auf 260°C erhöht. Man erhält ein farbhelles, lösungsmittelfreies Oligocarbonat mit einer rel. Lösungsviskosität von 1,157 (Dichlormethan, 25°C, 5 g/l). Der Gehalt an Verzweiger der Formel (4) im hergestellten Oligocarbonat beträgt <2 ppm. Dem Oligocarbonat werden nun 0,0001 g NaOH (5*10⁻⁴ Mol-%)' bezogen auf Bisphenol A, als 1 %ige wäßrige Lösung zugegeben und das Oligocarbonat bei 280°C und 10 Pa (0,1 mbar) 1,5 Stunden gerührt. Man erhält ein farbhelles, lösungsmittelfreies Polycarbonat mit einer relativen Lösungsviskosität von 1,305 (Dichlormethan, 25°C, 5 g/l). Der Gehalt an Verzweiger der Formel (6) im hergestellten Polycarbonat beträgt 55 ppm. Der phenolische OH-Wert des Polycarbonats beträgt 220 ppm.

### Beispiel 5

In einem 500 ml Dreihalskolben mit Rührer, Innenthermometer und Vigreuxkolonne (30 cm, verspiegelt) mit Brücke werden 114,15 g (0,500 Mol) Bisphenol A und 113,54 g (0,530 Mol) Diphenylcarbonat eingewogen. Die Apparatur wird durch Anlegen von Vakuum und Spülen mit Stickstoff (3 mal) vom Luftsauerstoff befreit und das Gemisch auf 150°C aufgeheizt. Jetzt werden 0,000687 g (5*10⁻⁴ Mol-%) BEMP = 2-tert.-Butylimino-2-diethylamino-1,3-dimethyl-perhydro-1,3-diaza-2-phosphorin, bezogen auf Bisphenol A, als 1%ige, wäßrige Lösung zugegeben und das entstehende Phenol bei 10 000 Pa (100 mbar) abdestilliert. Gleichzeitig wird die Temperatur bis auf 250°C gesteigert. Nun wird das Vakuum stufenweise bis auf 100 Pa (1 mbar) verbessert und die Temperatur auf 280°C erhöht. Man erhält ein farbhelles, lösungsmittelfreies Oligocarbonat mit einer relativen Lösungsviskosität von 1,203 (Dichlormethan, 25°C, 5 g/l). Der Gehalt an Verzweiger der Formel (4) im hergestellten Oligocarbonat beträgt <2 ppm. Dem Oligocarbonat werden nun 0,0001 g NaOH (5*10⁻⁴ Mol-%), bezogen auf Bisphenol A, als 1 %ige wäßrige Lösung zugegeben und das Oligocarbonat bei 280°C und 10 Pa (0,1 mbar) 1,5 Stunden gerührt. Man erhält ein farbhelles lösungsmittelfreies Polycarbonat mit einer relativen Lösungsviskosität von 1,312 (Dichlormethan, 25°C, 5 g/l). Der Gehalt an Verzweiger der Formel (6) im hergestellten Polycarbonat beträgt 35 ppm. Der phenolische OH-Wert des Polycarbonats beträgt 260 ppm.

### Beispiel 6

Wie Beispiel 1, nur werden 0,03464 g (1*10⁻² Mol-%) Phosphazen-Base P₄-t-Oct = 1-tert.-Octyl-4,4,4-tris-(dimethylamino)-2,2-bis-[tris-(dimethylamino)-phosphor-anylidenamino]-2λ⁵,4λ⁵-catenadi-(phosphazen), bezogen auf Bisphenol A, als 1 %ige wäßrige Lösung eingesetzt. Man erhält ein farbhelles, lösungsmittelfreies Polycarbonat mit einer relativen Lösungsviskosität von 1,252 (Dichlormethan, 25°C, 5 g/l). Der Gehalt an Verzweiger der Formel (6) im hergestellten Polycarbonat beträgt 28 ppm. Der phenolische OH-Wert des Polycarbonats beträgt 360 ppm.

### Beispiel 7

Wie Beispiel 1, nur werden 0,001453 g (1*10⁻³ Mol-%) Phosphazen-Base P₁-t-Oct = tert.-Octyl-imino-tris-(dimethylamino)-phosphoran, bezogen auf Bisphenol A, als 1 %ige wäßrige Lösung eingesetzt. Man erhält ein farbhelles, lösungsmittelfreies Polycarbonat mit einer relativen Lösungsviskosität von 1,228 (Dichlormethan, 25°C, 5 g/l). Der Gehalt an Verzweiger der Formel (6) im hergestellten Polycarbonat beträgt 15 ppm. Der phenolische OH-Wert des Polycarbonats beträgt 180 ppm.

### Beispiel 8

5130 g (22,5 Mol) Bisphenol A, 5152 g (24,07 Mol) Diphenylcarbonat und 6,49 ml einer 1 %igen wäßrigen Lösung BEMP = 2-tert.-Butylimino-2-diethyl-amino-1,3 -dimethyl-perhydro-1,3 -diaza-2-phosphorin (1*10⁻³ Mol %) werden in einem 25 1 Rührbehälter eingewogen. Der Behälter wird mit Stickstoff inertisiert und die Rohstoffe werden in 15 Minuten auf 200°C erhitzt. Bei einer Massetemperatur von 100°C wird der Rührer eingeschaltet und ein Vakuum von 30 000 Pa (300 mbar) angelegt. Die Temperatur wird eine Stunde bei 200°C gehalten und freigesetztes Phenol über eine Kolonne abdestilliert. Innerhalb einer weiteren Stunde wird die Temperatur auf 250°C erhöht und das Vakuum auf 10 000 Pa (100 mbar)und anschließend bei 250°C in 30 Minuten auf 1 000 Pa (10 mbar) verbessert. Nach Erhöhung der Massetemperatur auf 290°C wird bei dieser Temperatur im Hochvakuum polykondensiert. Nach Belüften mit Stickstoff wird das Polycarbonat aus dem Kessel ausgetragen und granuliert. Die relative Lösungsviskosität des isolierten Polycarbonats beträgt 1,213 (Dichlormethan, 25°C, 5 g/l), der Gehalt an Verzweiger der Formel (6) 35 ppm.

### Beispiel 9

5130 g (22,5 Mol) Bisphenol A, 5104 g (23,85 Mol) Diphenylcarbonat und 6,49 ml einer 1 %igen wäßrigen Lösung BEMP = 2-tert.-Butylimino-2-diethylamino-1,3-dimethyl-perhydro-1,3-diaza-2-phosphorin (1*10⁻³ Mol-%) werden in einem 251 Rührbehälter eingewogen. Der Behälter wird mit Stickstoff inertisiert und die Rohstoffe werden in 15 Minuten auf 200°C erhitzt. Bei einer Massetemperatur von 100°C wird der Rührer eingeschaltet und ein Vakuum von 30 000 Pa (300 mbar)angelegt. Die Temperatur wird eine Stunde bei 200°C gehalten und freigesetztes Phenol über eine Kolonne abdestilliert. Innerhalb einer weiteren Stunde wird die Temperatur auf 250°C erhöht und das Vakuum auf 10 000 Pa (100 mbar) und anschließend bei 250°C in 30 Minuten auf 500 Pa (5 mbar) verbessert. Nach Erhöhung der Massetemperatur auf 290°C und belüften mit Stickstoff werden 13 mg Natriumphenolat (5* 10⁻⁴ Mol-%) zugegeben, Hochvakuum angelegt und bei 290°C polykondensiert. Nach Belüften mit Stickstoff wird das Polycarbonat aus dem Kessel ausgetragen und granuliert. Die relative Lösungsviskosität des isolierten Polycarbonats beträgt 1,291 (Dichlormethan, 25°C, 5 g/l), der Gehalt an Verzweiger der Formel (6) 85 ppm.

### Beispiel 10

5130 g (22,5 Mol) Bisphenol A, 5104 g (23,85 Mol) Diphenylcarbonat und 12,98 ml einer 1 %igen wäßrigen Lösung BEMP = 2-tert.-Butylimino-2-diethylamino -1,3-dimethyl-perhydro-1,3-diaza-2-phosphorin (2^{∗}10⁻³ Mol-%) werden in einem 251 Rührbehälter eingewogen. Der Behälter wird mit Stickstoff inertisiert und die Rohstoffe werden in 15 Minuten auf 200°C erhitzt. Bei einer Massetemperatur von 100°C wird der Rührer eingeschaltet und ein Vakuum von 30 000 Pa (300 mbar) angelegt. Die Temperatur wird eine Stunde bei 200°C gehalten und freigesetztes Phenol über eine Kolonne abdestilliert. Innerhalb einer weiteren Stunde wird die Temperatur auf 250°C erhöht und das Vakuum auf 10 000 Pa (100 mbar) und anschließend bei 250°C in 30 Minuten auf 500 Pa (5 mbar) verbessert. Nach Erhöhung der Massetemperatur auf 290°C wird mit Stickstoff belüftet und das gebildete Oligomer aus dem Kessel ausgetragen und granuliert. Es hat zu diesem Zeitpunkt eine relative Lösungsviskosität von 1,149 (Dichlormethan, 25°C, 5 g/l). Dieses Oligocarbonat wird auf einer ZSK 32 (100 Upm; 300°C; 80 Pa (0,8 mbar); 2,0 kg/l) polykondensiert. Die relative Lösungsviskosität des so isolierten Polycarbonats beträgt 1,282 (Dichlormethan, 25°C, 5 g/l), der Gehalt an Verzweiger der Formel (6) 25 ppm.

## Patentansprüche

1. Umesterungsverfahren zur Herstellung von lösungsmittelfreiem Polycarbonat, ausgehend von Diphenolen, Kohlensäurediarylestern und gegebenenfalls Verzweigern und/oder Monophenolen sowie Katalysatoren bei Temperaturen zwischen 80°C und 400°C und Drücken von 100 000 (1000 mbar) bis 1 Pa (0,01 mbar), dadurch gekennzeichnet, daß man Phosphazen-Katalysatoren der Formel (1) 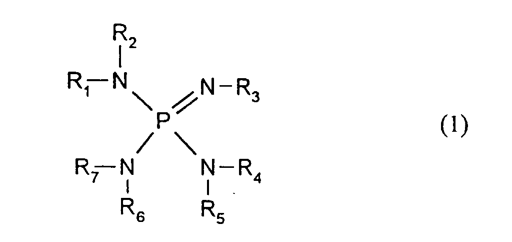 worin
R₁, R₂, R₃, R₄, R₅, R₆, R₇ = H, Alkyl, Alkenyl, Cycloalkyl, Aryl, Cycloalkenyl und die Reste R₁, R₂, R₃, R₄, R₅, R₆, R₇ gleich oder verschieden sein können,
oder der Formel (2) 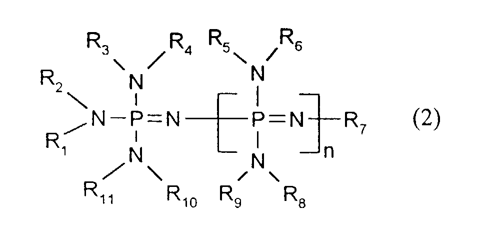 worin
R₁ bis R₁₁ = H, Alkyl, Alkenyl, Cycloalkyl, Aryl, Cycloalkenyl,
n = 1 bis 10 und die Reste R₁ bis R₁₁ gleich oder verschieden sein können
oder der Formel (3) 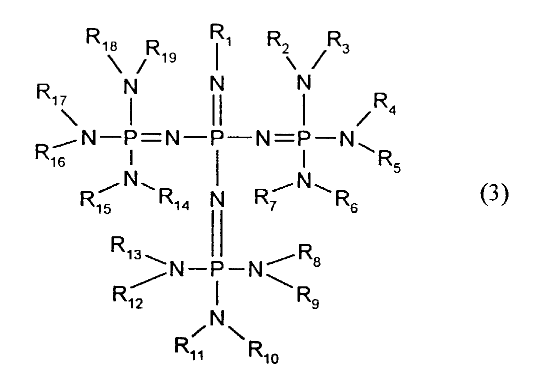 worin
R₁ bis R₁₉ = H, Alkyl, Alkenyl, Cycloalkyl, Aryl, Cycloalkenyl,
oder Kₓ⁺ X^{x-}
worin
K⁺ die entsprechenden Kationen der obengenannten Formel 1 bis 3 darstellen und
X = z.B. Carbonat, Acetat, Nitrat, Hydroxid, Halogenid, Phenolat, Diphenolat, Phosphat, Hydrogenphosphat und Boranat sein kann,
in Mengen von 10⁻² bis 10⁻⁸ Mol, bezogen auf 1 Mol Diphenol, einsetzt. (+) in dem der Gehalt an Verzweigerstruktur der Formel (4) 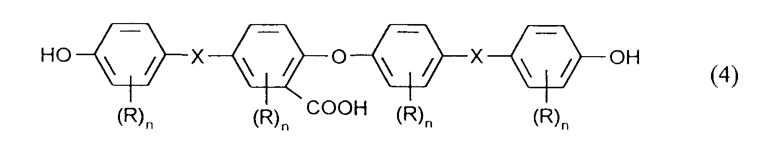 mit
X = C₁-C₈-Alkyliden oder Cycloalkyliden, S oder eine Einfachbindung und
R = CH₃, Cl oder Br und
n = Null, 1 oder 2,
einen Wert nach Totalverseifung und HPLC-Bestimmung von 300 ppm nicht übersteigt.

2. Verfahren zur Herstellung von aromatischem Polycarbonat gemäß Anspruch 1, dadurch gekennzeichnet, daß die Katalysatoren in Kombination mit Alkali/Erdalkalimetallkatalysatoren eingesetzt werden.

## Claims

1. Transesterification process for the production of solvent-free polycarbonate, in which the content of the branching structure of the formula (4) 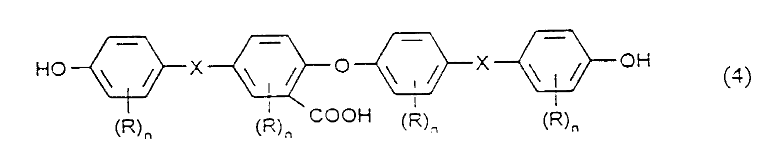 with
X = C₁-C₈ alkylidene or cycloalkylidene, S or a single bond and
R = CH₃, Cl or Br and
n = zero, 1 or 2,
does not exceed a value of 300 ppm after total saponification and HPLC determination, starting from diphenols, carbonic acid diaryl esters and optionally branching agents and/or monophenols together with catalysts at temperatures of between 80°C and 400°C and pressures of 100000 Pa (1000 mbar) to 1 Pa (0.01 mbar), characterised in that phosphazene catalysts of the formula (1) 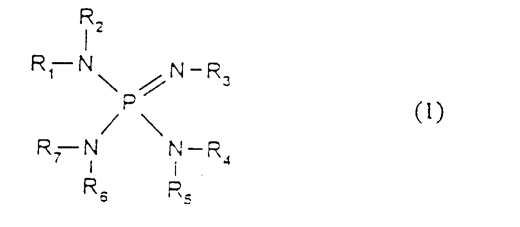 in which
R₁ , R₂ , R₃ , R₄ , R₅ , R₆ , R₇ = H, alkyl, alkenyl, cycloalkyl, aryl, cycloalkenyl and the residues R₁, R₂, R₃, R₄ , R₅ , R₆ , R₇ may be identical or different,
or of the formula (2) 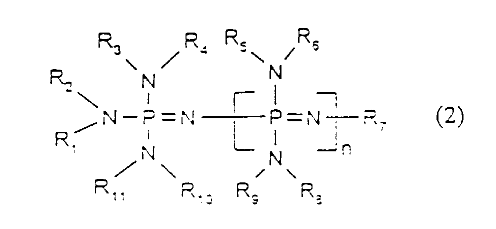 in which
R₁ to R₁₁ = H, alkyl, alkenyl, cycloalkyl, aryl, cycloalkenyl,
n = 1 to 10 and the residues R₁ to R₁₁ may be identical or different
or of the formula (3) 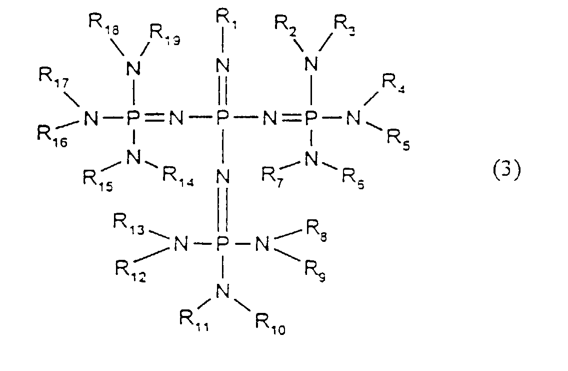 in which
R₁ to R₁₉ = H, alkyl, alkenyl, cycloalkyl, aryl, cycloalkenyl or Kₓ+X^{x-}
in which
K⁺ may denote the corresponding cations of the above-stated formulae 1 to 3 and
X may be, for example, carbonate, acetate, nitrate, hydroxide, halide, phenolate, diphenolate, phosphate, hydrogen phosphate and hydridoborate,
are used in quantities of 10⁻² to 10⁻⁸ mol relative to 1 mol of diphenol.

2. Process for the production of aromatic polycarbonate according to claim 1, characterised in that the catalysts are used in combination with alkali metal/alkaline-earth metal catalysts.

## Revendications

1. Procédé de trans-estérification pour préparer du polycarbonate exempt de solvant dans lequel la teneur en structure de ramification de formule (4) 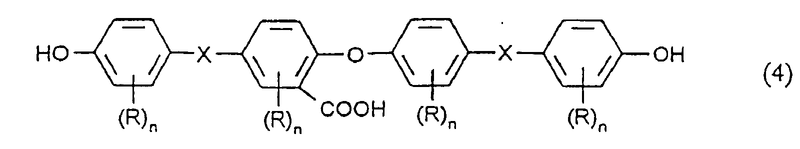 dans laquelle
X représente un groupe alkylidène en C₁-C₈ ou un groupe cycloalkylidène, S ou une liaison simple, et
R représente CH₃, Cl ou Br, et
n représente 0, 1 ou 2,
ne dépasse pas une valeur de 300 ppm après saponification totale et détermination par HPLC, à partir de diphénols, d'esters diaryliques de l'acide carbonique et, le cas échéant, d'agents de ramification et/ou de monophénols, ainsi que de catalyseurs, à des températures entre 80°C et 400°C et sous des pressions de 100.000 Pa (1000 mbar) à 1 Pa (0,01 mbar), caractérisé en ce qu'on met en oeuvre des catalyseurs de phosphazène répondant à la formule (1) 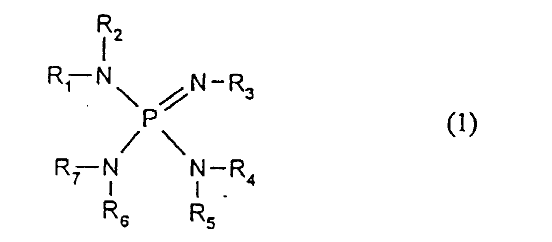 dans laquelle
R₁, R₂, R₃, R₄, R₅, R₆, R₇ représentent H, un groupe alkyle, un groupe alcényle, un groupe cycloalkyle, un groupe aryle, un groupe cycloalcényle et les radicaux R₁, R₂, R₃, R₄, R₅, R₆, R₇ peuvent être identiques ou différents,
ou répondant à la formule (2) 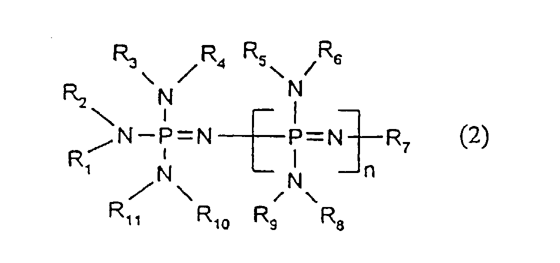 dans laquelle
R₁ à R₁₁ représentent H, un groupe alkyle, un groupe alcényle, un groupe cycloalkyle, un groupe aryle, un groupe cycloalcényle,
n représente de 1 à 10 et les radicaux R₁ à R₁₁ peuvent être identiques ou différents,
ou répondant à la formule (3) 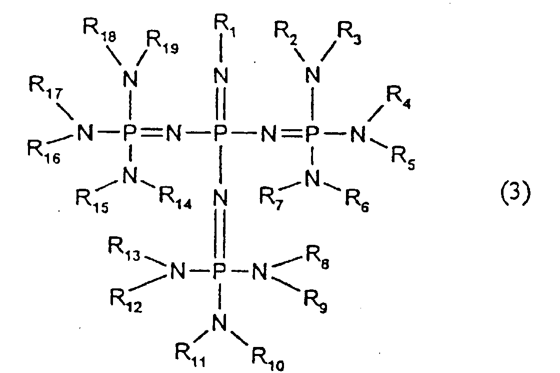 dans laquelle
R₁ à R₁₉ représentent H, un groupe alkyle, un groupe alcényle, un groupe cycloalkyle, un groupe aryle, un groupe cycloalcényle ou encore un groupe Kₓ+ X^{x-}
où
K⁺ représente les cations correspondants répondant aux formules 1 à 3 ci-dessus et
X peut représenter par exemple un carbonate, un acétate, un nitrate, un hydroxyde, un halogénure, un phénolate, un diphénolate, un phosphate, un hydrogénophosphate et un boranate,
dans des quantités de 10⁻² à 10⁻⁸ mole rapporté à 1 mole de diphénol.

2. Procédé pour la préparation de polycarbonate aromatique selon la revendication 1, caractérisé en ce qu'on met en oeuvre les catalyseurs en combinaison avec des catalyseurs de métaux alcalins/métaux alcalino-terreux.
